# FASCICULE DE BREVET EUROPEEN

(11) **EP 2 804 280 B1**
(45) Date de publication et mention de la délivrance du brevet: **04.11.2020**
(21) Numéro de dépôt: 14164144.9
(22) Date de dépôt: 10.04.2014
(51) Int. Cl.: H02J 3/01, B60L 9/00

(54) **Circuit électrique atténuateur d'harmoniques, équipement et installation comprenant un tel circuit**
Oberschwingungsdämpfender elektrischer Schaltkreis, Ausrüstung und Anlage, die einen solchen Schaltkreis umfasst
Electrical circuit for harmonic attenuation, equipment and facility including such a circuit

(30) Priorité: 17.05.2013 FR 1354437
(43) Date de publication de la demande: 19.11.2014
(73) Titulaire: Société Nationale SNCF, 93200 Saint-Denis (FR)
(72) Inventeur: Goeres, David, 72000 Le Mans (FR)
(74) Mandataire: IPAZ

(56) Documents cités:
- EP-A2- 1 126 573
- WO-A1-2006/105693
- CARPITA M ET AL: "LINE FILTER FOR HIGH POWER INVERTER LOCOMOTIVE USING ACTIVE CIRCUITFOR HARMONIC REDUCTION, PROTOTYPE TESTS RESULTS", EPE '95: 6TH. EUROPEAN CONFERENCE ON POWER ELECTRONICS AND APPLICATIONS. SEVILLA, SEPT. 19 - 21, 1995; [EUROPEAN CONFERENCE ON POWER ELECTRONICS AND APPLICATIONS], BRUSSELS, EPE ASSOCIATION, B, vol. 1, 19 septembre 1995 (1995-09-19), pages 1.898-1.903, XP000537639,
- H Akagi: "Modern active filters and traditional passive filters", BULLETIN OF THE POLISH ACADEMY OF SCIENCES TECHNICAL SCIENCES, 1 January 2006 (2006-01-01), XP055521818, Retrieved from the Internet: URL:http://bluebox.ippt.pan.pl/~bulletin/( 54-3)255.pdf [retrieved on 2018-11-07]
- TANAKA T ET AL: "A new combined system of series active and shunt passive filters aiming at harmonic compensation for large capacity thyristor converters", PROCEEDINGS OF THE INTERNATIONAL CONFERENCE ON INDUSTRIAL ELECTRONICS, CONTROL AND INSTRUMENTATION (IECON). KOBE, OCT. 28 - NOV. 1, 1; [PROCEEDINGS OF THE INTERNATIONAL CONFERENCE ON INDUSTRIAL ELECTRONICS, CONTROL AND INSTRUMENTATION (IECON)], NES Y, vol. CONF. 17, 28 October 1991 (1991-10-28), pages 723-728, XP010042068, DOI: 10.1109/IECON.1991.239198 ISBN: 978-0-87942-688-0

## Description

L'invention concerne un circuit électrique intégrant une atténuation d'harmoniques de courant générés par au moins un composant de ce circuit. Elle concerne également un équipement comprenant un tel circuit, et une installation comprenant un tel circuit ou un tel équipement.

Le domaine de l'invention est le domaine de l'alimentation d'un équipement électrique et/ou électronique par un signal électrique, et en particulier, le domaine de l'alimentation des dispositifs et systèmes ferroviaires, de transport urbain de type tram train, par une source électrique haute tension. Plus particulièrement, le domaine de l'invention est l'alimentation, par une source d'alimentation haute tension, des véhicules ferroviaires tels qu'une motrice, une locomotive ou une voiture voyageurs.

### Etat de la technique

Tout système alimenté par une infrastructure électrique délivrant un signal électrique haute tension comprend un ou des filtres électriques connectés à l'interface entre le système et l'infrastructure, en vue d'atténuer les harmoniques de courants générés par le système électrique dans l'infrastructure. Par exemple, les harmoniques de courants générés par un train sur l'infrastructure alimentant le train sont atténués par un filtre connecté électriquement au pantographe du train.

Le filtre atténuateur d'harmoniques est constitué de composants, actifs ou passifs, connectés électriquement à l'infrastructure électrique délivrant le signal haute tension. Ces composants doivent, par conséquent, être dimensionnés pour résister aux grandeurs électriques délivrées par l'infrastructure. Par exemple, un filtre connecté au pantographe d'un train fonctionnant sous caténaire 25kV doit être dimensionné pour fonctionner sous 25kV.

De ce fait, les composants du filtre sont coûteux, volumineux et lourd. Le volume et le poids du filtre sont liés à l'amplitude de la tension électrique délivrée par l'infrastructure à laquelle le filtre est connecté. A titre d'exemple le filtre atténuateur utilisé dans une locomotive présente un poids d'environ une tonne.

Par ailleurs, une défaillance du filtre ou d'un des composants du filtre peut induire des dysfonctionnements graves sur le système et sur l'infrastructure. Pour éviter de tels dysfonctionnements, le filtre est associé à un ou plusieurs dispositifs de protection, tels que des disjoncteurs ou contacteurs, dont la fonction est de couper le courant de défaut et d'isoler les composants défectueux du filtre. Ces dispositifs de protection augmentent le volume, le poids et le coût du filtre.

Le document EP1126573A2 divulgue un dispositif atténuateur utilisé dans une locomotive qui comprend un filtre relié électriquement d'une part à une couche de blindage disposée autour d'un conducteur électrique et d'autre part à une masse électrique.

L'invention a pour but de pallier les inconvénients précités.

Notamment, le but de l'invention est de proposer un circuit électrique haute tension intégrant une atténuation des courants harmoniques moins couteux, moins lourds et moins volumineux.

Enfin un autre but de l'invention est de proposer un équipement alimenté par un signal électrique haute tension et intégrant une atténuation des courants harmoniques moins couteux, moins lourds et moins volumineux.

### Exposé de l'invention

L'invention permet d'atteindre au moins l'un des buts précités par un circuit électrique, en particulier haute tension, pour un équipement, notamment un équipement ferroviaire, alimenté par un courant électrique alternatif, dit fondamental, délivré par au moins une ligne, en particulier haute tension, ledit circuit électrique comprenant au moins un composant alimenté par ledit courant fondamental et générant dans ledit circuit électrique au moins un courant alternatif non désiré, dit harmonique, qui correspond plus particulièrement à une harmonique dudit courant fondamental, ledit circuit étant caractérisé en ce qu'il comprend en outre un module d'atténuation comprenant :
- au moins un moyen inductif, couplé de manière galvanique, c'est-à-dire sans liaison par un conducteur d'électricité, avec ledit circuit électrique, de sorte que pour chacun desdits courants fondamental et harmonique, un courant proportionnel et de même fréquence est induit dans ledit moyen inductif, et
- au moins un moyen de filtrage, relié en série audit moyen inductif, pour filtrer le courant fondamental induit dans ledit moyen inductif et laisser passer le courant harmonique induit.

Selon l'invention, les courants harmoniques engendrés dans le circuit électrique par les composants de ce circuit, sont éliminés grâce à un module d'atténuation qui est couplé à ce circuit de manière galvanique, c'est-à-dire sans aucun conducteur d'électricité entre le circuit électrique et le module d'atténuation.

Par conséquent, le module d'atténuation peut être réalisé avec des composants standards qu'il n'est pas nécessaire de dimensionner par rapport à la tension du circuit électrique. Ainsi, ces composants peuvent présenter un poids, un volume et un coût plus faibles comparés aux systèmes d'atténuation de l'état de la technique.

Dans le cadre des circuits électriques alimentés par un signal électrique haute tension, tel que dans une motrice ou une voiture ferroviaire, le module d'atténuation peut présenter un poids, un volume et un coût standard, bien inférieurs à celui des systèmes d'atténuation actuels. En effet, le module d'atténuation n'est pas parcouru par le signal haute tension circulant dans le circuit électrique.

De plus, le module d'atténuation étant couplé au circuit électrique de manière galvanique, il n'est jamais parcouru par le signal circulant dans le circuit électrique. Par conséquent, il ne nécessite pas de dispositif de protection, ce qui diminue encore plus son coût, son poids et son volume.

Par « haute tension » on entend un signal électrique de tension supérieure ou égale à 750V.

Selon l'invention, ledit au moins un moyen inductif comprend au moins une bobine de couplage entourée de manière galvanique autour d'une partie d'une branche dudit circuit électrique.

La branche du circuit comprend un élément isolant, telle qu'une enveloppe isolante, disposé autour d'un fil électrique dans lequel circule le signal électrique. Dans ce cas, la bobine de couplage peut être disposée autour de l'élément isolant, et plus particulièrement de l'enveloppe isolante.

Le moyen de filtrage peut avantageusement comprendre uniquement des composants passifs.

Le moyen de filtrage peut alternativement comprendre uniquement des composants actifs ou une combinaison d'au moins un composant passif avec au moins un composant actif.

Selon un mode de réalisation préféré, ledit au moins un moyen de filtrage peut comprendre au moins un circuit filtre comprenant au moins une résistance, et/ou au moins une capacité et/ou au moins une bobine, monté(s) en série et/ou en parallèle.

Selon un exemple de réalisation non limitatif, ledit au moins un moyen de filtrage peut comprendre un circuit filtre formé par au moins une capacité disposée en parallèle avec au moins une résistance. Un tel circuit filtre se comporte comme un filtre passe-haut dont la fréquence de coupure dépend de la valeur de la capacité et de la valeur de la résistance. Ainsi, il est possible de choisir une fréquence de coupure supérieure à la fréquence du courant fondamental et inférieure à la fréquence du ou des courants harmoniques.

Le circuit selon l'invention peut être utilisé dans un équipement alimenté avec un signal électrique haute tension, en particulier avec une tension d'alimentation supérieure ou égale 750V, et plus particulièrement avec une tension d'alimentation égale à 750V, ou 1500V, 3000V ou 25 000V.

Avantageusement, le circuit selon l'invention peut être utilisé pour l'alimentation d'un véhicule ferroviaire alimenté par une ligne haute tension. Dans ce cas, le circuit selon l'invention peut comprendre au moins une partie d'une ligne de toiture du véhicule ferroviaire recevant un signal électrique haute tension et le module d'atténuation peut en particulier être couplé à cette ligne de toiture.

Selon un autre aspect de l'invention, il est proposé un équipement électrique et/ou électronique comprenant au moins un circuit selon l'invention.

L'équipement selon l'invention peut être un équipement prévu pour être alimenté par une ligne haute tension.

Au moins un composant du circuit électrique d'un tel équipement selon l'invention peut être un transformateur électrique, en particulier un transformateur de courant et/ou de tension, générant un ou des courants harmoniques d'un courant fondamental alimentant ce transformateur.

Selon une application préférée, l'équipement selon l'invention est un véhicule ferroviaire, et plus particulièrement une motrice ou une voiture ferroviaire, notamment d'un train. Dans ce cas, le circuit électrique comprend la ligne de toiture du véhicule ferroviaire, le signal électrique haute tension est fourni par une caténaire et au moins un composant du circuit électrique est un transformateur électrique.

Dans tous les cas, le circuit selon l'invention est relié d'une part à un premier potentiel électrique fourni par une source électrique et d'autre part à un potentiel électrique de référence, par exemple à une masse électrique qui peut être la terre.

Selon encore un autre aspect de l'invention, il est proposé une installation électrique comprenant :
- au moins un équipement électrique et/ou électronique selon l'invention, et/ou au moins un circuit électrique selon l'invention ;
- au moins une source électrique délivrant un signal électrique, en particulier haute tension, pour alimenter ledit équipement et/ou ledit circuit ; et
- au moins une ligne électrique pour relier ladite source audit équipement et/ou audit circuit.

Dans le cas où l'équipement est un véhicule ferroviaire alimenté par un signal électrique haute tension, la ligne électrique est une ligne électrique haute tension telle que, par exemple, une caténaire.

D'autres avantages et caractéristiques apparaîtront à l'examen de la description détaillée d'exemples nullement limitatifs, et des dessins annexés sur lesquels :
- la FIGURE 1 est une représentation schématique d'une installation selon l'invention ; et
- la FIGURE 2 est une représentation schématique du principe de fonctionnement du module d'atténuation mis en œuvre dans la présente invention.

Il est bien entendu que les modes de réalisation qui seront décrits dans la suite ne sont nullement limitatifs.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

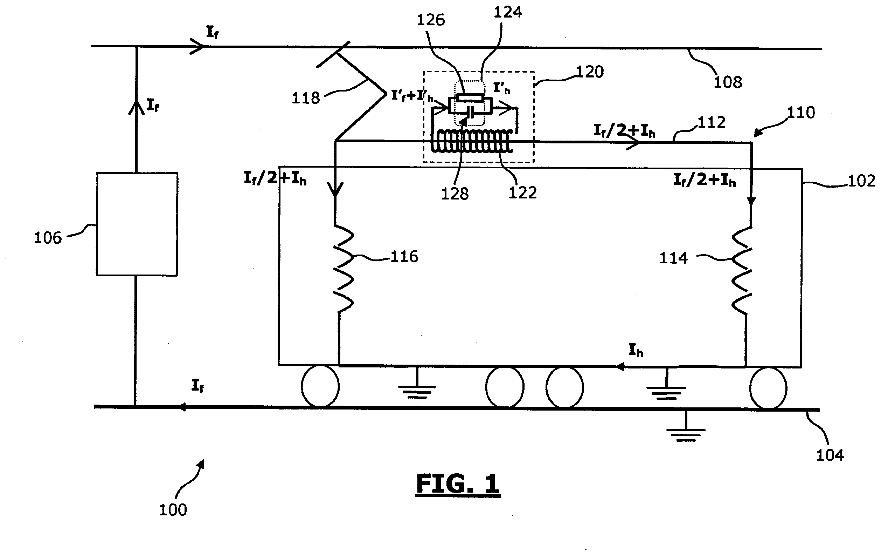

La FIGURE 1 est une représentation schématique d'un exemple d'une installation selon l'invention.

L'installation 100 représentée sur la FIGURE 1 est une installation ferroviaire pour alimenter un équipement ferroviaire tel qu'un véhicule ferroviaire 102, qui peut être une motrice ou une voiture de train, circulant sur une voie ferrée 104.

Le véhicule ferroviaire 102 est alimenté par un signal haute tension de 25 000V fourni par une sous-station 106 reliée au véhicule ferroviaire 102 par une ligne haute tension, telle qu'une caténaire 108, reliant la sous-station 106 au véhicule ferroviaire 102.

La sous station 106 fournit un courant fondamental alternatif, noté I_{f}, d'une fréquence prédéterminée, appelée fréquence fondamentale.

Le véhicule 102 comprend un circuit électrique 110 comprenant une partie au moins d'une ligne de toiture 112 du véhicule 102 et deux branches comportant chacune un transformateur, respectivement 114 et 116. Le circuit 110 est relié à une masse électrique, constituée par la terre, en aval des transformateurs 114 et 116.

Le circuit 110 est connecté à la caténaire 108 par l'intermédiaire d'un connecteur, par exemple un pantographe 118, prélevant le courant fondamental I_{f} qui vient alimenter le circuit électrique 110 et plus particulièrement les composants de ce circuit 110 tels que les transformateurs 114 et 116 et les convertisseurs électriques (non représentés) qui leur sont associés, qui en fonctionnement génèrent un ou des courant(s) harmonique(s), noté Iₕ, qui est/sont réinjecté(s) dans le circuit 110 et circulent dans ce circuit y compris dans la ligne de toiture 112.

Le circuit 110 comprend en outre un module 120 d'atténuation des courants harmoniques. Ce module d'atténuation 120 comprend une bobine 122 entourée autour d'une partie de la ligne de toiture 112 de manière galvanique, c'est-à-dire sans conducteur électrique. Le module d'atténuation 120 comprend également un filtre passe-haut 124 composé d'une résistance 126 placée en parallèle avec une capacité 128. L'entrée du filtre 124 est reliée à une extrémité de la bobine 122 et la sortie du filtre 124 à l'autre extrémité de la bobine 122.

Bien entendu le filtre pourrait être différent de celui représenté sur la FIGURE 1 et comprendre d'autres composants en plus ou à la place de ceux représentés.

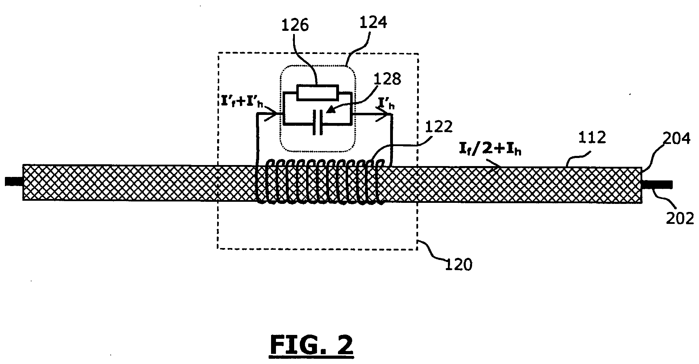

La FIGURE 2 est une représentation schématique du principe du module d'atténuation 120 de la FIGURE 1.

Tel que montré sur la FIGURE 2, la ligne de toiture 112 comprend un fil électrique conducteur 202 transportant le signal électrique haute tension, et donc le courant alternatif, autour duquel est disposée une enveloppe isolante 204, réalisant une isolation galvanique entre le fil électrique 202 et la bobine 122. La bobine 122 est disposée autour de cette enveloppe isolante 204 et est donc couplée de manière galvanique à la ligne de toiture de sorte que les courants circulant dans cette ligne de toiture 112 génèrent dans la bobine des courants induits de même fréquence et proportionnels, à savoir :
- un courant induit, dit fondamental, noté I'_{f}, de même fréquence que le courant fondamental I_{f} et proportionnel à ce courant fondamental, et
- un ou des courant(s) induit(s), dit(s) harmonique(s), noté I'ₕ, de même fréquence que le(s) courant(s) harmonique(s) Iₕ et proportionnel(s) à ce(s) courant(s) harmonique(s).

Les valeurs de la résistance 126 et de la capacité 128 du filtre passe-haut 124 sont choisies pour ajuster la fréquence de coupure du filtre 124, de sorte que le filtre 124 :
- atténue ou coupe la fréquence fondamentale, i.e. le courant fondamental induit I'_{f}, et
- laisse passer sans atténuation le(s) courant(s) harmonique(s) induit(s) I'ₕ.

Le filtre passe-haut 124 reçoit en entrée le courant fondamental induit I'_{f} et le(s) courant(s) harmonique(s) induit(s) I'ₕ dans la bobine de couplage 122. Le filtre passe-haut 124 filtre le courant fondamental induit I'_{f} et fournit à sa sortie uniquement le(s) courant(s) harmonique(s) induit(s) I'ₕ. Le courant fondamental induit I'_{f} est tellement atténué qu'il est négligeable en sortie du filtre 124.

Le(s) courant(s) harmonique(s) induit(s) I'ₕ est/sont alors injecté(s) dans la bobine à l'autre extrémité que celle connectée à l'entrée du filtre 124.

Ce(s) courant(s) harmonique(s) induit(s) I'ₕ circule(nt) dans la bobine et induit(sent) à leur tour un courant dans la ligne de toiture 112. Ces courants induits dans la ligne de toiture viennent s'ajouter aux courants harmoniques et les atténuent dans la ligne de toiture et dans le circuit 110.

Grâce au couplage galvanique réalisé par le bobine et au filtre passe-haut qui se comporte comme un court-circuit en haute-fréquence, les courants harmoniques émis par les transformateurs sont atténuées, voire éliminées, et ne sont donc pas réinjectés dans le rail ou la caténaire. Ces courants harmoniques restent piégés dans le circuit constitué par la ligne de toiture et la caisse du train qui constitue une masse électrique dans le train.

Bien entendu l'invention n'est pas limitée aux exemples qui viennent d'être décrits. Par exemple, le couplage inductif entre le circuit et le module d'atténuation peut être réalisé différemment. Le filtre d'atténuation 120 peut également être réalisé avec d'autres composants que ceux décrits. De plus, le circuit peut comprendre d'autres composants que des transformateurs électriques en plus ou à la place de ces transformateurs.

## Revendications

1. Circuit électrique (110) pour un équipement (102), notamment un équipement ferroviaire, alimenté par un courant électrique alternatif, dit fondamental, ledit circuit électrique (110) comprenant au moins un composant (114, 116) alimenté par ledit courant fondamental et générant dans ledit circuit électrique (110) au moins un courant alternatif non désiré, dit harmonique, ledit circuit étant **caractérisé en ce qu'**il comprend en outre un module (120) d'atténuation comprenant :
- au moins un moyen inductif (122), couplé de manière galvanique avec ledit circuit électrique (110), de sorte que pour chacun desdits courants fondamental et harmonique, un courant proportionnel et de même fréquence est induit dans ledit moyen inductif (122), et
- au moins un moyen (124) de filtrage, relié en série audit moyen inductif (122), pour filtrer le courant fondamental induit dans ledit moyen inductif (122) et laissant passer le courant harmonique induit,
ledit au moins un moyen inductif (122) comprenant une bobine de couplage entourée de manière galvanique autour d'une partie d'une branche (112) dudit circuit électrique (110), ladite partie de la branche (112) comprenant une enveloppe isolante, disposée autour d'un fil électrique dudit circuit électrique (110).

2. Circuit (110) selon la revendication 1, **caractérisé en ce que** ledit au moins un moyen de filtrage (124) comprend au moins un circuit comprenant au moins une résistance (126), et/ou au moins une capacité (128) et/ou au moins une bobine, monté(s) en série et/ou en parallèle.

3. Circuit (110) selon la revendication 1, **caractérisé en ce que** ledit au moins un moyen de filtrage (124) comprend un circuit formé par au moins une capacité (128) disposée en parallèle avec au moins une résistance (126).

4. Utilisation du circuit (110) selon l'une quelconque des revendications précédentes dans un équipement (102) alimenté avec un signal électrique haute tension, en particulier avec une tension d'alimentation supérieure ou égale à 750V, et plus particulièrement avec une tension d'alimentation égale à 750V, ou 1500V ou 25 000V.

5. Utilisation du circuit (110) selon l'une quelconque des revendications 1 à 3, pour l'alimentation d'un véhicule ferroviaire (102) alimenté par une ligne (108) haute tension.

6. Equipement (102) électrique et/ou électronique comprenant au moins un circuit (110) selon l'une quelconque des revendications 1 à 3.

7. Equipement (102) selon la revendication précédente, **caractérisé en ce qu'**il est alimenté par une ligne haute tension (108).

8. Equipement (102) selon la revendication précédente, **caractérisé en ce qu'**au moins un composant du circuit électrique (110) est un transformateur (114, 116) électrique, en particulier un transformateur de courant et/ou de tension.

9. Equipement (102) selon l'une quelconque des revendications 7 ou 8, **caractérisé en ce qu'**il s'agit d'un véhicule ferroviaire.

10. Installation (100) électrique comprenant :
- au moins un équipement (102) selon l'une quelconque des revendications 6 à 8, et/ou au moins un circuit électrique (110) selon l'une quelconque des revendications 1 à 3 ;
- au moins une source électrique (106) délivrant un signal pour alimenter ledit équipement (102) et/ou ledit circuit (110) ; et
- au moins une ligne électrique (108) pour relier ladite source (106) audit équipement (102) et/ou audit circuit (110).

## Patentansprüche

1. Elektrische Schaltung (110) für eine Einrichtung (102), insbesondere eine Schienenverkehrseinrichtung, die mit einem elektrischen Wechselstrom, Grundschwingungsstrom genannt, versorgt wird, wobei die elektrische Schaltung (110) mindestens eine Komponente (114, 116) umfasst, die mit dem Grundschwingungsstrom versorgt wird und in der elektrischen Schaltung (110) mindestens einen unerwünschten Wechselstrom, Oberwellenstrom genannt, erzeugt, wobei die Schaltung **dadurch gekennzeichnet ist, dass** sie außerdem ein Dämpfungsmodul (120) umfasst, umfassend:
- mindestens ein induktives Mittel (122), das mit der elektrischen Schaltung (110) galvanisch gekoppelt ist, sodass für jeden der Grund- und Oberschwingungsströme in dem induktiven Mittel (122) ein proportionaler Strom derselben Frequenz induziert wird, und
- mindestens ein Filtermittel (124), das mit dem induktiven Mittel (122) in Reihe geschaltet ist, um den in dem induktiven Mittel (122) induzierten Grundschwingungsstrom auszufiltern und den induzierten Oberschwingungsstrom durchzulassen,
wobei das mindestens eine induktive Mittel (122) eine Koppelspule umfasst, die galvanisch getrennt um einen Teil eines Zweigs (112) der elektrischen Schaltung (110) gewickelt ist, wobei der Teil des Zweigs (112) eine isolierende Hülle umfasst, die um einen Leitungsdraht der elektrischen Schaltung (110) herum angeordnet ist.

2. Schaltung (110) nach Anspruch 1, **dadurch gekennzeichnet, dass** das mindestens eine Filtermittel (124) mindestens eine Schaltung umfasst, die mindestens einen Widerstand (126) und/oder mindestens einen Kondensator (128) und/oder mindestens eine Spule umfasst, die in Reihe und/oder parallel geschaltet sind.

3. Schaltung (110) nach Anspruch 1, **dadurch gekennzeichnet, dass** das mindestens eine Filtermittel (124) eine Schaltung umfasst, die durch mindestens einen Kondensator (128) gebildet wird, der parallel zu mindestens einem Widerstand (126) angeordnet ist.

4. Verwendung der Schaltung (110) nach einem der vorhergehenden Ansprüche in einer Einrichtung (102), die mit einem elektrischen Hochspannungssignal versorgt wird, insbesondere mit einer Versorgungsspannung von mehr als oder gleich 750 V und insbesondere mit einer Versorgungsspannung von 750 V oder 1500 V oder 25.000 V.

5. Verwendung der Schaltung (110) nach einem der Ansprüche 1 bis 3 zur Versorgung eines Schienenfahrzeugs (102), das über eine Hochspannungsleitung (108) versorgt wird.

6. Elektrische und/oder elektronische Einrichtung (102), umfassend mindestens eine Schaltung (110) nach einem der Ansprüche 1 bis 3.

7. Einrichtung (102) nach dem vorhergehenden Anspruch, **dadurch gekennzeichnet, dass** sie über eine Hochspannungsleitung (108) versorgt wird.

8. Einrichtung (102) nach dem vorhergehenden Anspruch, **dadurch gekennzeichnet, dass** mindestens eine Komponente der elektrischen Schaltung (110) ein elektrischer Transformator (114, 116), insbesondere ein Strom- und/oder Spannungswandler, ist.

9. Einrichtung (102) nach einem der Ansprüche 7 oder 8, **dadurch gekennzeichnet, dass** es sich dabei um ein Schienenfahrzeug handelt.

10. Elektrische Anlage (100), umfassend:
- mindestens eine Einrichtung (102) nach einem der Ansprüche 6 bis 8 und/oder mindestens eine elektrische Schaltung (110) nach einem der Ansprüche 1 bis 3;
- mindestens eine Stromquelle (106), die ein Signal zur Stromversorgung der Einrichtung (102) und/oder der Schaltung (110) abgibt; und
- mindestens eine Stromleitung (108) zum Verbinden der Quelle (106) mit der Einrichtung (102) und/oder mit der Schaltung (110).

## Claims

1. Electrical circuit (110) for equipment (102), in particular railway equipment, supplied with an alternating electrical current, called primary current, said electrical circuit (110) comprising at least one component (114, 116) supplied with said primary current and generating, in said electrical circuit (110), at least one undesired alternating current, called harmonic current, said circuit being **characterized in that** it further comprises an attenuation module (120) comprising:
- at least one induction means (122), which is galvanically coupled to said electrical circuit (110), such that, for each of said primary and harmonic currents, a proportional current of the same frequency is induced in said induction means (122); and
- at least one filtration means (124), which is connected in series to said induction means (122), for filtering the primary current induced in said induction means (122) and allowing the induced harmonic current to pass;
said at least one induction means (122) comprising a coupling coil, which is galvanically wound around a portion of an arm (112) of said electrical circuit (110), said portion of the arm (112) comprising an insulating shell, arranged around an electrical wire of said electrical circuit (110).

2. Circuit (110) according to claim 1, **characterized in that** said at least one filtration means (124) comprises at least one circuit comprising at least one resistor (126) and/or at least one capacitor (128) and/or at least one coil that is/are mounted in series and/or in parallel.

3. Circuit (110) according to claim 1, **characterized in that** said at least one filtration means (124) comprises a circuit formed by at least one capacitor (128) arranged in parallel with at least one resistor (126).

4. Use of the circuit (110) according to any of the preceding claims in equipment (102) supplied with a high-voltage electrical signal, in particular with a supply voltage greater than or equal to 750 V, and more particularly with a supply voltage equal to 750 V, or 1,500 V, or 25,000 V.

5. Use of the circuit (110) according to any one of claims 1 to 3, for supplying power to a railway vehicle (102) supplied with power via a high-voltage line (108).

6. Electrical and/or electronic equipment (102) comprising at least one circuit (110) according to any one of claims 1 to 3.

7. Equipment (102) according to the preceding claim, **characterized in that** power is supplied thereto via a high-voltage line (108).

8. Equipment (102) according to the preceding claim, **characterized in that** at least one component of the electrical circuit (110) is an electrical transformer (114, 116), in particular a current and/or voltage transformer.

9. Equipment (102) according to either claim 7 or claim 8, **characterized in that** it is a railway vehicle.

10. Electrical installation (100) comprising:
- at least one item of equipment (102) according to any one of claims 6 to 8, and/or at least one electrical circuit (110) according to any one of claims 1 to 3;
- at least one electrical source (106) outputting a signal in order to supply power to said equipment (102) and/or said circuit (110); and
- at least one electrical line (108) for connecting said source (106) to said equipment (102) and/or to said circuit (110).
